Europäisches Patentamt

European Patent Office

Office européen des brevets

(19)

(11) Publication number: 0 389 864

A2

(12) # EUROPEAN PATENT APPLICATION

(21) Application number: 90104754.8

(51) Int. Cl.5: A47B 57/56, F16B 12/36

(22) Date of filing: 13.03.90

(30) Priority: 13.03.89 US 322537
14.08.89 US 393677

(43) Date of publication of application:
03.10.90 Bulletin 90/40

(84) Designated Contracting States:
BE DE FR GB IT NL

(71) Applicant: SELFIX, INC.
4501 West 47th Street
Chicago, IL 60632(US)

(72) Inventor: Ricard, Michael J.
208 E. Olive St.
Porpect Hts. I11 60070(US)
Inventor: Chap, John P.
115th & Bell Road
Lemont, I11 60439(US)
Inventor: Greenberg, Dorothy J.
708 N. Harvey
Oak Park, I11 60302(US)
Inventor: Schwarz, Eugene
6560 Fairmont
Downers Grove, I11 60516(US)

(74) Representative: Strehl, Schübel-Hopf,
Groening
Maximilianstrasse 54 Postfach 22 14 55
D-8000 München 22(DE)

(54) Support mounting system; and mounting and support system.

(57) A support mounting system includes a plurality of uprights or standards (102) to which are attached one or more connectors engageable with the standard and with the component to be supported. The connector includes a pair of connector elements engageable one with the other for clamping the standard therebetween. On element may be a support member (120) capable of being mounted to the standards (102) at its intended position. Each support member or connector element (120) partially surrounds the standard (102) to which it is attached and interacts with a complementary connector element or coupling member (130), which also partially surrounds the standard (102), to enclose and grip the standard or upright. A cam action connector system (128, 132) facilitates and allows each support member (120) to be attached to an upright (102) at any selected position. In one embodiment, a support member, such as a shelf supporting bracket (120), has a portion (122) adapted to act as a support for another component such as a shelf, and another portion, which may take the form of a generally open end or side, which is adapted and configured to interface with an upright (102) to which it is attached. A coupling member (130), which interacts with the support member (120), also interfaces with the upright (102) from the generally opposite side from the support member (120) to attach the support member to the upright at a selected position by grasping the upright therebetween. In another embodiment, one of the connector elements includes means for receiving at least a portion of the component to be supported and includes a member engageable with that connector element and the received portion for preventing relative movement therebetween.

## SUPPORT MOUNTING SYSTEM

### Background Of The Invention

The present invention relates to support mounting systems, and more particularly to such systems in which structures, such as support members or shelves, are attachable to uprights or standards in a wide range of positions with respect thereto.

A variety of systems exist in which shelves or other component structures are attached to and supported on uprights or standards. One of the problems with many such installations is that such components cannot be attached to the uprights or standards at desired positions. In many such systems, the components to be supported can only be installed at discrete locations, thus limiting the installed support members to predefined positions. While this may be acceptable in some instances, there are many occasions when such restrictions render such installations unsatisfactory.

For example, there are a variety of such support systems which take the form of shelving supported by various types of standards. Shelves are normally installed so as to lie in a level horizontal plane. When a plurality of standards are used to support one or more shelves, the shelves attached to and supported by such standards will not be level if the standards are not correctly positioned, and cannot be adjusted. If only discrete adjustments of shelf position relative to the standards is available, it may not be possible to properly locate the shelves and achieve level installation, even if the standards are adjustable. Even then, it may be necessary to reinstall the entire system.

The flexibility of such support systems would be greatly enhanced if the adjustability of the support members relative to the standards could be improved. While there are devices that can be used to provide adjustability, e.g., U-bolts passing through or around a standard and connected to an article being supported, they require tools and often skilled installers; and they may not be suitable for many applications and locations. Thus, while a U-bolt might be suitable for installing a basketball backboard on a pole, it would not be appropriate for use with decorative shelving in exposed locations, or in closets where they might catch on clothes.

There are a variety of support systems, many of which are free-standing. Others are mounted to walls or other support structures. In addition to most such systems providing only discrete adjustments, the assembly of such systems typically requires a variety of tools and fasteners, which contribute to their complexity and to difficulty in set up and assembly, and thereby limits the use of such systems.

Such systems may take the form of shelving systems used as modular storage organizers. Shelf organizing systems have found wide application in closets and other storage rooms. Such support systems are intended to be installed in a wide variety of configurations that can be adapted to individual locations and applications, and specifically tailored for such uses. The ability to easily adjust and alter the configurations and change components in such systems would be desirable in order to increase the flexibility and use of such systems and to improve their marketability.

At the same time, it would be desirable to simplify the installation and set up of such support systems, thereby encouraging their use by homeowners and others who do not have the experience or special skills required for installation of many existing support systems.

It is often desirable to alter the configuration of an existing system, either by adjusting the position of previously installed shelves or components, or by adding new ones. However, a variety of adjustable support systems require installation from one end of a standard. This precludes adding components between previously installed ones. Thus, once such systems are installed or erected, it is difficult to change their configuration or add or remove components, and it is often not possible to remove components without disassembling substantial portions thereof.

### Summary Of The Invention

In accordance with the present invention, there is provided a support mounting system which is highly adjustable, which is adaptable for use in a number of configurations and in various environments, and which is capable of being assembled and installed without resort to tools or other equipment.

A wide variety of various types of support systems exist, and take many forms. For convenience and ease of description, examples of such support systems are described herein with respect to shelving support systems. It is understood, however, that the following comments apply as well, where applicable, to other support systems.

A support mounting system incorporating the present invention includes a plurality of uprights or standards to which are attached one or more support members which are capable of being mounted to the standards at their intended position. Each support member partially surrounds the standard to which it is attached and interacts with a complementary coupling member, which also partially surrounds the standard, to enclose and grip the standard or upright.

The mounting system incorporating the present invention utilizes a cam action connector system which facilitates and allows each support member to be attached to an upright at any selected position. The connector system incorporates a pair of connector elements which interact with each other and with an upright or standard from opposite sides to grasp the upright at a selected position. Typically, one of the connector elements is located at a desired position on the upright and the other is slidingly engaged therewith to capture the upright therebetween. Complementary members on the connector elements interact to clamp the upright as the connector elements are moved in opposite directions relative to each other, and generally in a direction parallel to the axis of the upright.

In accordance with the present invention, a support member, such as a shelf supporting bracket, has a portion adapted to act as a support for another component such as a shelf, and another portion, which may take the form of a generally open end or side, and is adapted and configured to interface with an upright to which it is attached. A coupling member, which interacts with the support member, also interfaces with the upright from the generally opposite side from the support member to attach the support member to the upright at a selected position by grasping the upright therebetween. The support member can be located at a selected position on the upright and the coupling member slidingly engaged therewith to attach the support member to the upright while maintaining the support member at its selected position.

The coupling and support members enclose the upright therebetween. Complementary connectors on the interconnecting coupling and support members, which may take the form of complementary camming surfaces, act to clamp the support member to the upright and retain it in position. The coupling member or the support member or both are moved in opposite directions relative to each other generally parallel to the axis of the upright. Due to the configuration of the complimentary connectors incorporated as part of the support system of the present invention, heavier loads on the support member increase the gripping force to the upright.

One exemplary embodiment of a support system incorporating the present invention, which for illustrative purposes is disclosed as a shelving system, includes a plurality of generally vertical uprights. A plurality of support members or brackets are attached to the uprights at generally horizontal co-planar positions. The support members or brackets are adapted to support shelving connected thereto. The brackets not only include the connector portions for attachment to the uprights at any selected vertical position, but are configured to receive and retain shelving placed thereon. The shelving itself may be adjustable in order to adapt to various spacings between adjacent uprights, and shelving of sections of different sizes can be accommodated.

In accordance with another aspect of the present invention, additional shelves and connectors can be added to the shelving system, even after it has been totally assembled. A support member can be attached in place at the desired location without the necessity to slide or move it from one end of the upright to the selected position. The open-ended support and coupling members can thus be positioned at a selected location, and connected together to clamp the support member to the upright at that location. An entire system can be easily assembled without tools, and the various components can be easily repositioned or relocated in a similar manner.

The support members forming a part of the present invention can take various forms. The support members may be shelf brackets adapted to underlie and support shelves placed thereon and suitably fastened thereto. Such brackets and the shelves used therewith may include positioning means such as projections receivable in complementary apertures to retain the shelves in place. Alternatively, the support members may take the form of connectors adapted to directly receive a portion of a shelf being supported. Thus, in one embodiment, the support member is formed with a slot opening toward the standard and adapted to receive and capture a portion of the shelf. The shelving can be supported in a cantilevered fashion from one or more standards, or alternatively, may be supported by a plurality of standards forming a free-standing shelving system with vertical uprights at spaced locations, such as at the corners of the shelving system.

The support system incorporating the present invention is readily adaptable for use in conjunction with various types of shelves such as coated wire shelves or generally solid shelves. The shelves can be adjustable, and can be adapted to a number of purposes. A variety of auxiliary complementary articles can be utilized in conjunction with the shelving and can be attached thereto. Thus, dividers can be clamped or hung from the shelves, and other components, such as drawers, can interact with the shelves or the dividers for providing a variety of capabilities in a shelving system. If desired, clothes rods can be utilized by connecting them to the brackets at selected locations. For example, rods can be passed through apertures in the brackets or be supported by receiving slots formed in such brackets.

In accordance with the another aspect of the present invention, the mounting and support system adapted for use in conjunction with components, e.g., shelves, attachable to a standard utilizing a connector system, includes means for rigidifying the assembly and minimizing play and movement of the components relative to each other.

In accordance with the present invention, a component, such as a shelf, is supported by a connector system and is assembled thereto. Retaining means are utilized for retaining the shelf stationary with respect to the two elements of the connector system and the upright to which it is attached. The utilization of a simple rigidifying member minimizes movement of the components relative to each other, and avoids the necessity of using expensive, high tolerance components in order to assure rigid structures. Components can be manufactured from a variety of materials, such as plastics, the shape and dimensions of which may vary somewhat from part to part.

Numerous other advantages and features of the present invention will become readily apparent from the following detailed description of the invention and the embodiments thereof, from the claims, and from the accompanying drawings in which the details of the invention are fully and completely disclosed as a part of this specification.

## Brief Description Of the Drawings

FIGURE 1 is a perspective view of one embodiment of a support system incorporating the present invention;

FIGURE 2 is an exploded view of a multi-section standard or upright showing the side mounting of a support member to standard for the support system of FIG. 1;

FIGURE 3 is a perspective view showing a support member and a coupling member partially assembled on a standard;

FIGURE 4 is a perspective view similar to FIG. 5 showing the assembled support member and coupling member;

FIGURE 5 is a sectional view taken along the lines 5-5 of FIG. 1;

FIGURE 6 is a perspective view showing one embodiment of a shelf for use with the support system of the present invention;

FIGURE 7 is a sectional view along the lines 7- 7 of FIG. 6;

FIGURE 8 is a partial plan view showing the interaction of the bracket and coupling member attached to a standard shown in section;

FIGURE 9 is a sectional view taken along the lines 9-9 of FIG. 8;

FIGURE 10 is a perspective view of an alternative embodiment of the support system incorporating the present invention;

FIGURE 11 is a perspective view showing an alternative embodiment of a support member and a coupling member for use with the support system of FIG. 10;

FIGURE 12 is a perspective view showing an alternative embodiment of a clothes rod for use with the support system of FIG. 10;

FIGURE 13 is a perspective view showing an alternative embodiment of a shelf for use with the support system of FIG. 10;

FIGURE 14 is a perspective view showing a divider for use with the support system of FIG. 10;

FIGURE 15 is a perspective view showing a bin for use with the support system of FIG. 10; and

FIGURE 16 is a perspective view of another alternative embodiment of the support system incorporating the present invention.

Figure 17 is a perspective view of an embodiment of the shelf supporting system incorporating the present invention;

Figure 18 is a sectional view taken along the line 18-18 of Figure 17;

Figure 19 is a partial exploded view of the components of the embodiment shown in Figs 17 and 18; and

Figure 20 is a sectional view taken along the line 20-20 of Figure 19.

## Detailed Description

While this invention is susceptible of embodiment in many different forms, there is shown in the drawing and will be described herein in detail specific embodiments thereof with the understanding that the present disclosure is to be considered as an exemplification of the principles of the invention and is not intended to limit the invention to the specific embodiment illustrated.

The support system incorporating the present invention may take many forms. For convenience and ease of description, such support systems are described here with respect to shelving systems. It is understood, however, that the following comments apply as well where applicable to other support systems.

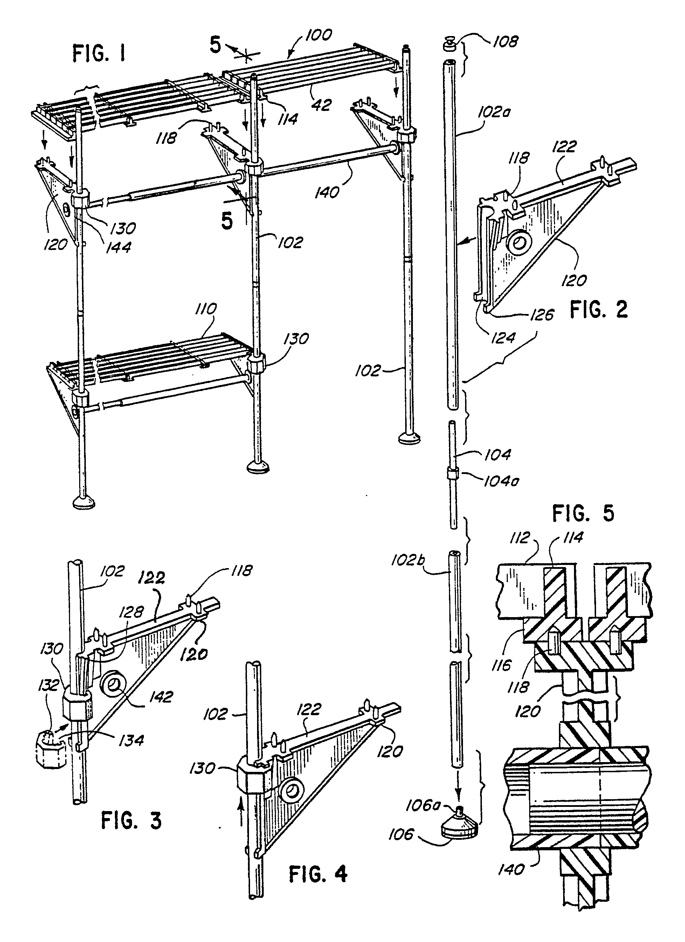

The support system incorporating the present invention exhibits a high degree of flexibility resulting from its modular construction and its totally flexible assembly. As shown in the FIGS 1-9, one embodiment of a shelving system 100 includes a plurality of annular uprights or vertical standards 102. The standard 102 may include multiple sections 102a, 102b in order to achieve desired height. A connector 104 of smaller diameter is provided for insertion into the ends of the annular standard sections 102a, 102b and has an enlarged central stop portion 104a which abuts the ends of each of the sections, as shown in FIGS. 1 and 2. The standards may be provided with a suitable foot 106 engageable with one end of the standard 102. The foot 106 has a reduced diameter projection 106a insertable into the hollow end of the standard 102. The upper end of the standard 102 may have an adjustable cap 108 for engagement with a ceiling. for fixing the standard 102 between the floor and the ceiling.

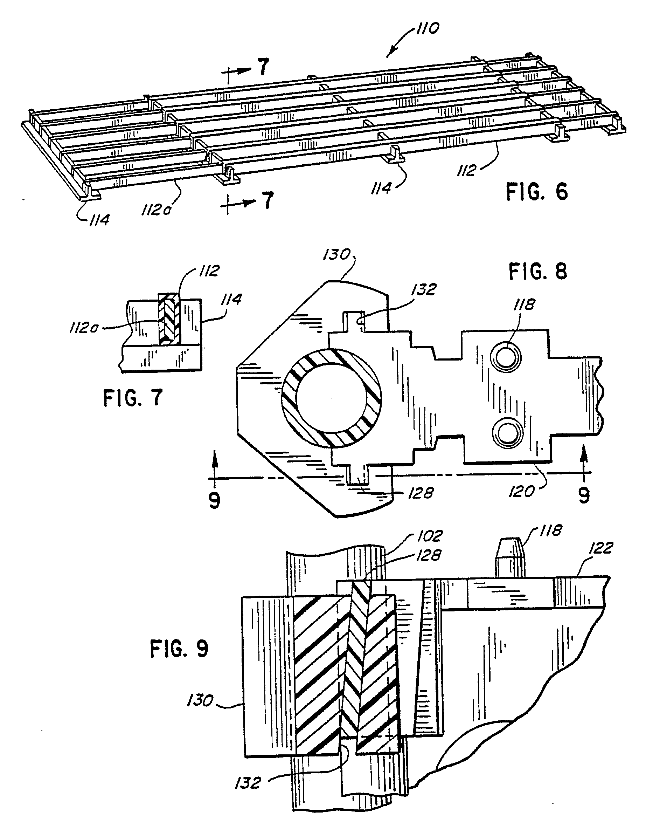

Because of the high degree of adjustability in the shelving system incorporating the present invention, the standards 102 can be erected and installed at a variety of desired locations and are not restricted to specific locations or to specific spacings. The system incorporated in the present invention includes one or more shelves 110 which may be adjustable in length to accommodate different spacing between the standards 102. The shelves 110 include a plurality of elongated rails 112 interconnected by transverse, spaced-apart cross-beams 114. Each of the cross-beams 114 is formed with a plurality of apertures 116 therein to receive upwardly extending pins 118 formed in the top of each of a plurality of support members or shelf brackets 120 that are attached to the standards 102 for supporting the shelves 110 relative thereto. The cross-beams 114 are slidable relative to the rails 112 for positioning at the location of the brackets 120. The length of each shelf 110 is adjusted by use of an extension portion having shelf rails 112a of a smaller cross-section than the main rails 112. The extension rails 112a are telescopically insertable in main rails 112 for movement relative thereto, as indicated in FIGS. 7 and 8.

The support members 120 shown in FIGS. 1-9 take the form of a generally triangular bracket having an upper support surface 122 in which are formed the plurality of pins 118 for insertion into the apertures 116 formed in the cross-beams 114 of the shelving 110, as shown in FIG. 5. Two sets of pins 118 are provided on each bracket 120 so that adjacent shelves 110 can be installed end-to-end to provide an extended shelving run between a plurality of adjacent standards 102. One side 124 of the bracket 120 is open-ended, and is shown as being concave with a shape and size complementary to the shape and side of the vertical standard 102. The open side 124 is adapted and designed to frictionally fit over the standard 102 and engage it for positioning closely adjacent thereto, as shown in the drawing. The concave open side 124 constitutes a standard engaging portion which extends substantially the entire height of the bracket 120. The lower extremities of the open side 124 has opposed extensions 126 that, in the case of a cylindrical standard, extend past the diameter to frictionally grasp and snap on to the standard 102 to assist in retaining the bracket 120 in position.

The opposed edges or gripping portions of the open side 124 of the bracket 120 are formed with angled guide or cam rails 128. A coupling member 130 is formed with corresponding cam slot 132 engageable with the cam rails 128 on the bracket 120. The bracket 120 and coupling member 130 are moved in opposite directions along the axis of the standard 102, as shown in FIGS. 3 and 4. The cam rails 128 are formed at an angle to the axis of the standard 102 when the bracket 120 is attached to the standard, with the bottom of the rails 128 being closest to standard. The cam slots 132 are formed at a complementary angle. The coupling member 130 is also open sided with a concave opening 134 complementary in size and shape to the standard 102. The rails 128 of the bracket 120 are inserted into the slots 132 of coupling member 130. As the coupling 130 is moved up relative to the bracket 120, the shelf and coupling are pulled together around the vertical standard 102 to grasp the standard 102 therebetween to retain the bracket 120 and any shelf 110 supported thereon in place. The configuration of the cam rails 128 and the cam slots 132 is selected so that additional weight on the bracket 120 increases the gripping force between the bracket 120 and coupling member 130, and the standard 102 captured therebetween.

The open-sided bracket 120 and coupling member 130 allow direct side attachment of the bracket 120 to the standard 102 at any location without requiring insertion from one end of the standard, thereby permitting and allowing installation of additional brackets and shelves or other components at any location along the standard, even after the standards and shelving system have been erected.

If a clothes pole is desired, an expandable, telescoping clothes pole 140 can be passed through apertures 142 formed in the bracket body or web and retained in place by suitable end caps 144 affixed to the end of the clothes pole 140.

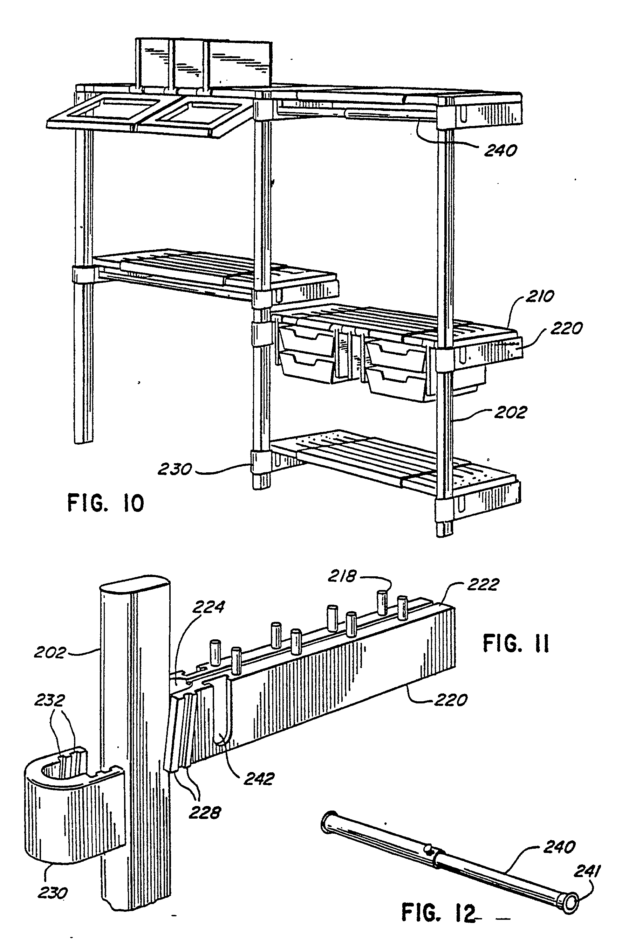

FIGS. 10-15 show an alternative embodiment of a shelving system embodying the support system of the present invention. As shown, the uprights 202 in this alternative embodiment are generally rectangular in cross-section with the shorter sides, i.e., the front and back ends being curved. If appropriate, the uprights 202 may include multiple sections. A connector (not shown), generally similar to the connector 104 but shaped to conform to the shape of the standards 202, of smaller size may be provided for insertion into the ends of the uprights 202. Feet and caps (not shown) may also be provided, as discussed above.

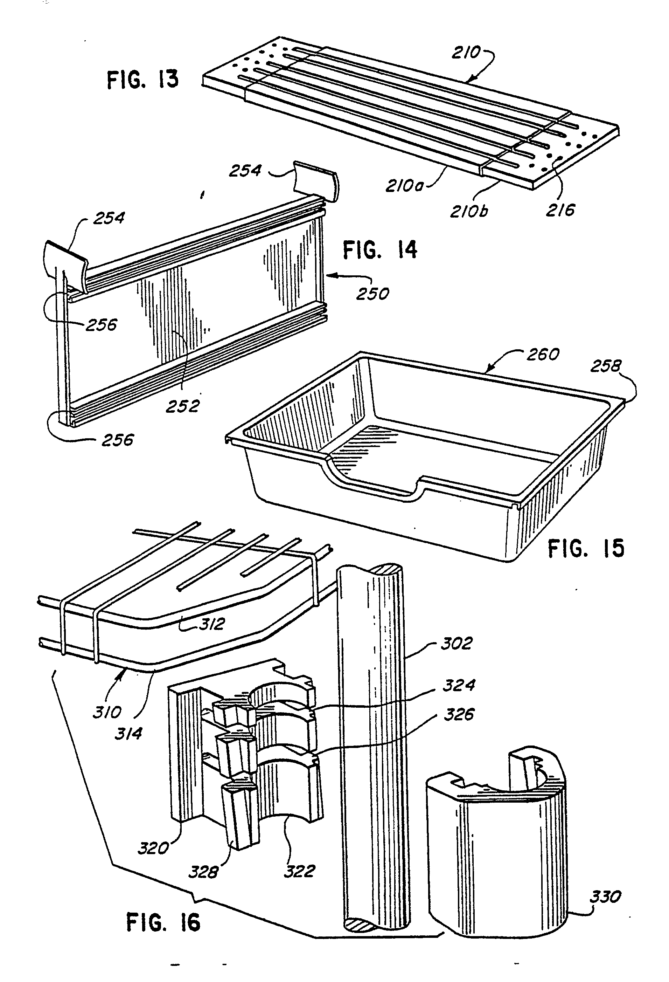

The system incorporating the present invention includes one or more shelves 210 which may be adjustable in length to accommodate different spacing between the standards 202. As seen in FIGS. 10 and 13, the shelves 210 are formed with continuous surfaces and include plural sections for adjustability, a central section 210a and end sections 210b. The center section 210a is hollow to accommodate the end sections 210b slidably inserted at either end of the center section 210a and adjustable relative thereto to alter the length of each shelving section. The shelves 210 are formed with a plurality of apertures 216 therein to receive upwardly extending pins 218 formed in the top of each of a plurality of support members or shelf brackets 220 that are attached to the standards 202 for supporting the shelves 210 thereon.

The support members or brackets 220 shown in FIGS. 10 and 11 take the form of generally rectangular arms having an upper support surface 222 in which are formed the plurality of pins 218 for insertion into the apertures 216 formed in the shelving 210. Two sets of pins 218 are provided on each bracket 220 so that adjacent shelves 210 can be installed end-to-end to provide an extended shelving run between a plurality of adjacent standards 202. One side 224 of the bracket 220 is open-ended, and is shown as being generally concave with a shape and size complementary to the shape and side of the vertical standard 202. Thus the open end 224 of bracket 220 has a curved end and elongated sides with generally planar inner surfaces to abut against and receive the standards or uprights 202. The open side 224 is adapted and designed to frictionally fit over the standard 202 and engage it for positioning closely adjacent thereto, as shown in the drawing. The concave open side 224 constitutes a standard engaging portion which extends substantially the entire height of the bracket 220.

Each of the opposed edges or gripping portions 224a, 224b of the open side 224 of the bracket 220 are formed with a pair of angled guide or cam rails 228. A coupling member 230 is formed with corresponding cam slots 232 engageable with the cam rails 228 on the bracket 220. In this embodiment, two cam rails 228 and to matching cam slots 232 are used. This allows use of a more streamlined and less bulky coupling member with out while retaining the desired gripping effectiveness of the support system. The bracket 220 and coupling member 230 are moved in opposite directions along the axis of the standard 202, as discussed above. The cam rails 228 are formed at an angle to the axis of the standard 202 when the bracket 220 is attached to the standard, with the bottom of the rails 228 being closest to standard. The cam slots 232 are formed at a complementary angle. The coupling member 230 is also open sided with a concave opening 234 complementary in size and shape to the standard 202. The cam slots 232 are formed in each of the opposed edges or gripping portions 230a of the coupling member 230. The rails 228 of the bracket 220 are inserted into the slots 232 of coupling member 230, as described above. As the coupling 230 is moved up relative to the bracket 220, the shelf and coupling member are pulled together around the vertical standard 202 to grasp the standard 202 therebetween to retain the bracket 220 and any shelf 210 supported thereon in place. The configuration of the cam rails 228 and the cam slots 232 is selected so that additional weight on the bracket 220 increases the gripping force between the bracket 220 and coupling member 230, and the standard 202 captured therebetween.

If a clothes pole is desired, an expandable, telescoping clothes pole 240 formed with enlarged flange portion 241 can be inserted into slots 242 formed in both sides of the body of the brackets 220. The poles are retained in place by placement of the shelves 210 on the brackets 220.

Various accessories can be attached to the shelves 210. For examples, a divider 250, shown in FIGS 10 and 14, can be attached to the shelves 210 to either extend up or hang down therefrom. The divider 250 is a generally planar panel 252 have a pair of gripping plates 254 formed at opposite corners. The gripping plates are curved to conform to the curved edges of the shelves 210 and are sufficiently flexible to snap onto the shelves and be retained in place as shown in FIG. 10. A plurality of tracks 256 are formed in the sides of each divider. The tracks 256 are configured to slidingly receive complementary tracks 258 formed at the edges of appropriate accessories such as the bin 260 shown in FIG. 15. Other accessories such as tie racks, shoe boxes and the like can be configured to be received in and supported by the dividers 250.

The support system of the present invention is also capable of acting to directly support shelves in a free standing configuration. As shown in FIG. 16, the support member 320 is formed with a pair of generally parallel slots 322, 324 spaced vertically one above the other for interacting directly with a shelf such as wire shelf 310. These slots are adapted to receive the frame rails 312, 314 of the shelf 310 which are inserted into the slots 324, 326 prior to assembly and attachment of the support member 320 to the standard 302. The support member shown in FIG. 16 is similar to the support member 120 in that it has a single cam rib 328. It interacts with a coupling member shown as being substantially identical to the coupling member 130. As shown in FIG. 16, the support member 320 is connected to a corner of the shelf 310. When forming part of a free standing system, four standards 302 with support members 320 and coupling members 330 are connected to the four corners of shelf 310.

As shown in the drawing, the system incorporating the present invention is designed to attach an article, such as a shelf, to a plurality of upright or vertical standards. In the drawing, one standard 412 is shown as affixed to a tapered corner 410a of a single shelf 410. It should be understood that one or more standards 412 and connecting systems 415 can be utilized in order to support a shelf 410 or other article in an assembly.

In one embodiment, the shelf 410 is composed of a plurality of coated wire members 416, 418 arranged in intersecting arrangement to define a support surface. The ends of each of the wire members 416, 418 terminate in downwardly projecting extensions 416a, 418a and are attached to a framework, which extends around the periphery of the shelf 410 and is shown as including a pair of spaced apart parallel wires 420 which define with ends 416a, a depending flange portion 422 of the shelf 410. The corner 410a of the shelf 410 may conveniently be truncated and formed at an angle to facilitate attachment of the shelf 410 adjacent to the vertical standard 412.

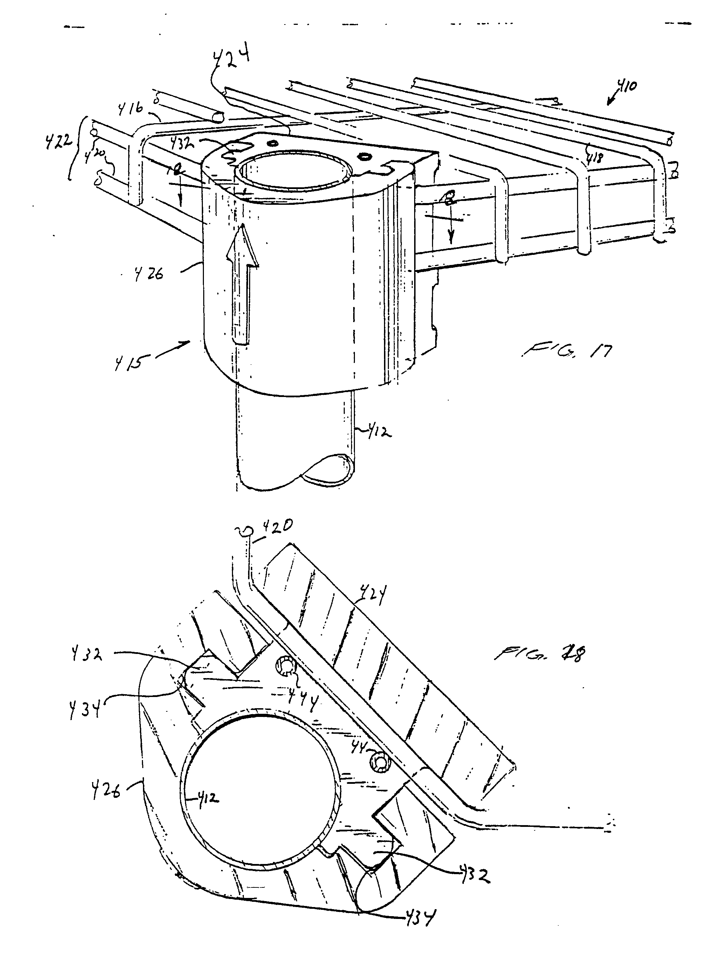

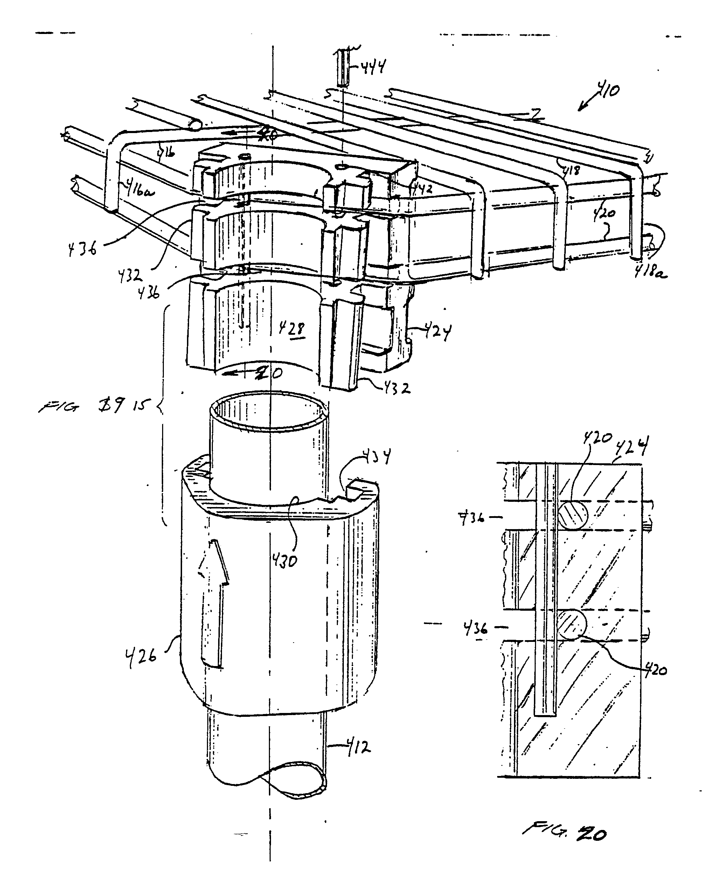

In conjunction with the shelf shown in the drawing, the coupling connecting system 415 includes a pair of connecting elements 424, 426. Each of the connecting elements 424, 426 is formed with a concave gripping portion 428, 430, which have a shape complementary to the shape of the standard 412. A pair of cam rails 432 are disposed on the opposite lateral sides and extend outwardly from the body of the first connecting element 424 and interact with correspondingly configured cam slots 434 formed on the inner side surfaces of the other connecting element 426. The cam rails 432 and the slots 434 are disposed at an angle to the axis of the standard 412, as discussed in the aforementioned co-pending application. As a result, when the two connecting elements are moved in a direction generally parallel to the axis of the standard 412 relative to one another, the standard is clamped therebetween. For example, in reference to Figures 17 and 19, as the second connecting element 426 is moved upwardly with the cam slots 434 riding over the cam rails 432, the two elements 424, 426 of the connecting system 415 are pulled toward each other to clamp the standard 412 therebetween and retain the assembly 415 in place. In this regard, the peripheral rails 420 of the shelf 410 are received in horizontal slots 436 formed in the first connecting element 432, and which open inwardly to the upright 412 through the surface 428. Ideally, the components would be dimensioned so the connecting elements 424, 426 would hold the shelf tightly as the standard is clamped therebetween. However, the dimensions of the various components, including the diameter of the standard and the thicknesses of the components, vary and, therefore, the shelf is not always tightly grasped when the connector 415 is attached to the upright 412. This is indicated diagrammatically by the spacing between the two connector elements 424, 426 and the gap between the shelf rail 420 and the support system.

In order to eliminate play and movement between the shelf 410 and the assembled connector 415, the element 424 is provided with a plurality of apertures 442 oriented generally transverse to the slots 436 in which the captured shelf rails 420 are located. The apertures 442 are adapted to receive retaining members therein. In the disclosed embodiment, a pair of roll pins 444 are inserted into the apertures 442 formed and engage the surface of the shelf rails 420 to capture the rails tightly between the surface and the pins 444. By utilizing a resilient member, such as a roll pin, the retaining member can press tightly against the shelf rail and retain it tightly in position. As a result, play and relative movement between the shelf and the other components of the system can be readily controlled and substantially eliminated, thus providing a relatively rigid shelving system, while accommodating components of somewhat varying dimensions and eliminating the requirement for high manufacturing costs that might be associated with the production of very high tolerance components.

It should be appreciated that, if desired, the shelves can be preassembled to the support members and the pins inserted during the manufacturing process, or, alternatively, the shelves and components of the system can be shipped independently, allowing the pins to be inserted by the user when the system is assembled.

Thus there has been disclosed a support system which can be utilized in a variety of environments and which is highly adaptable and adjustable. In the support system incorporating the present invention, support members are attachable to standards or uprights at virtually any position thereon directly at the desired position. This not only facilitates ease of installation, but allows for easy adjustment and alteration of the configuration and inclusion of additional components when and as desired. The support system of the present invention requires no tools for assembly, and yet provides secure attachment of the support members to the uprights to which they are connected. While shelving systems have been illustrated for ease and convenience, the support system of the present invention is adaptable for a variety of purposes beyond just supporting shelves.

From the foregoing, it will be observed that numerous variations and modifications may be effected without departing from the true spirit and scope of the novel concept of the invention. It is to be understood that no limitation with respect to the specific apparatus illustrated herein is intended or should be inferred. It is, of course, intended to cover by the appended claims all such modifications as fall within the scope of the appended claims.

## Claims

1. A support system comprising;
a generally vertical support standard;
a support member directly attachable to said standard at a selected position thereon, said support member including an attachment portion having a shape adapted to receive and engage said standard; and
a coupling member, including an attachment portion having a shape adapted to receive and engage with said standard and said support member disposed on the generally opposite side of said standard from said coupling member, said support member and said coupling member each including complementary connecting means engageable one with the other and configured to tighten said coupling and support members about said standard for retention in place thereon at said location.

2. A support system as claimed in claim 1, wherein;
said coupling member and said support member are movable one relative to the other in a direction generally parallel to the axis of said standard for engagement one with the other and for effecting said tightening of said members on said standard.

3. A support system as claimed in claim 1, wherein;
said support and coupling members are open-sided and have portions extending therefrom adapted to engage opposite sides of said standard and extending partially around the adjacent sides for connection one to the other.

4. A support system as claimed in claim 3, including;
camming means formed on either said support member or said coupling member and complementary camming means formed on the other of said members, said camming means being engageable one with the other for effecting connection therebetween in response to the relative movement of said members in opposite directions generally along the axis of said standard.

5. A support system as claimed in claim 4, wherein;
one of said camming means comprise ribs oriented generally along the axis of said standard, but at an angle thereto, whereby said relative sliding movement between said coupling member and said support member effects shifting thereof towards said standard to effect clamping of the standard enclosed therebetween.

6. A support system as claimed in claim 1, wherein;
said support member includes a portion extending out from said standard and adapted to receive thereon a member to be supported.

7. A support system as claimed in claim 1, including;
a plurality of said standards and a plurality of said support members attached thereto at selected positions thereon;
and shelf means extending between and supported on said support members.

8. A support system as claimed in claim 7, including;
means on said support member interacting with said shelf means for retaining it in position thereon.

9. A support system as claimed in claim 8, wherein;
said interacting means comprises a plurality of projections formed on the upper surface of said support member and engageable in complementary apertures formed in said shelf means for retaining said shelf means in position.

10. A support system as claimed in claim 1, including;
a member to be supported; and
slot means found in said support member for receiving a portion of said member to be supported therefrom inserted therein.

11. A support system as claimed in claim 10, wherein;
said slot means opens towards said standard, said member to be supported be captured in said slot means and held against removal by said standard.

12. A support system comprising;
a plurality of generally vertical support standards;
a plurality of shelf support members attachable to said standard at selected positions thereon; and
coupling members, one being disposed on the generally opposite side of said standard from each said support members, each of said oppositely disposed support members and coupling members being engaged one with the other and configured to tighten said coupling and support members about said standard for retention in place thereon at said location.

13. A support system as claimed in claim 1, wherein;
said coupling members and said support members are movable one relative to the other in a direction substantially parallel to the axis of said standard to effect said engagement one with the other to effect said tightening of said members on each of said standards.

14. A support system as claimed in claim 13, wherein;

each of said support and coupling members are open-sided and have a portion extending partially around one of said standards for effecting said engagement one with the other.

15. A support system as claimed in claim 14, including;

camming members formed on each of said support members and complementary camming slots formed on each of said coupling members for effecting said engagement in response to the relative movement of said members in opposite directions along the axis of said standard.

16. A support system as claimed in claim 15, wherein;

said camming ribs and slots are oriented generally along the lines of the axis of said standard, but at an angle thereto, whereby a relative sliding movement between said coupling member and said support member effects clamping of the standard enclosed therebetween.

17. Mounting and support system for rigidly supporting component structures on a standard, comprising:

a generally vertically oriented standard;

a connector engageable with said standard, and with the component to be supported, for supporting said component on said standard;

said connector comprised of a pair of connector elements engageable one with the other for clamping the standard therebetween;

one of said connector elements including means for receiving at least a portion of said component to be supported; and

means engageable with said one connector element and with said portion of the component being supported for preventing relative movement between said component and said connector element.

18. A mounting and support system as claimed in claim 17, wherein:

said one connector element includes an opening therein for receiving said portion of said component; and wherein

said movement preventing means includes a retaining member intersecting said opening and engaging said supported component for precluding said relative movement therebetween.

19. A mounting and support system as claimed in claim 18, wherein:

said opening extends into said one connector element from one said thereof and terminates at a closed end adjacent the side opposite said one side; and wherein

said movement preventing means is engageable with said portion of said supported component for capturing said portion between said movement preventing means and the closed end of said opening for retaining said component in place within said one connector element and for precluding said relative movement therebetween.

20. A mounting and support system as claimed in claim 19, wherein:

said one side of said one connector element has a surface configured to engage said standard.

21. A mounting and support system as claimed in the claim 20, wherein:

said supported component is retained in said opening between said movement preventing member and the closed end of said opening.

22. A mounting and support system as claimed in the claim 21, wherein:

said movement preventing member is spaced from said closed end of said opening by a distance no greater than the thickness of the captured portion of said component.

23. A mounting and support system as claimed in the claim 22, wherein:

said movement preventing member is spaced from said closed end of said opening by a distance less than the thickness of the captured portion of said component; and wherein

said movement preventing member is resilient for biasing said portion of said component against the closed end of said opening.

24. A mounting and support system, comprising:

a generally vertical support standard;

a connector system comprised of a pair of connector elements disposed on the generally opposite sides of said support standard;

each of said connector elements including one side having a surface having a shape complementary to the shape of said support standard and engageable therewith, and complementary connecting means on each of said connecting elements engageable one with the other and configured to tighten said connecting elements about said standard for clamping said standard therebetween and retaining said elements in place on said standard;

one of said connector elements including a horizontal slot formed therein and extending into said one connector element from said one side through said complementary surface and terminating at a closed end adjacent the side opposite said one side;

a shelf member having a portion receivable in said opening;

an aperture formed in said one connector element and oriented transverse to and intersecting said opening; and

an elongated member disposed in said aperture and engageable with said shelf portion disposed in said opening for retaining said shelf portion between said elongated member and the closed end of said opening for preventing relative movement between said component and said connector element.

25. A mounting and support system as claimed in claim 24, wherein:
said elongated member is resilient and is spaced from said closed end of said opening by a distance less than the thickness of the captured portion of said shelf for biasing said shelf portion against the closed end of said opening.

FIG. 1

FIG. 2

FIG. 3

FIG. 4

FIG. 5

FIG. 6

FIG. 7

FIG. 8

FIG. 9

FIG. 10

240

210

220

202

230

FIG. 11

202

224

218

222

232

220

242

228

230

FIG. 12

240

241

FIG. 13

210

210a

210b

216

254

254

254

FIG. 14

250

256

256

252

256

260

258

FIG. 15

312

302

324

326

310

314

320

328

322

330

FIG. 16

424

416

410

422

420

432

426

418

415

FIG. 17

412

420

424

432

434

FIG. 28

444

444

426

412

432

434

FIG. 19 15

FIG. 20